# EUROPÄISCHE PATENTSCHRIFT

(11) **EP 4 284 574 B1**
(45) Veröffentlichungstag und Bekanntmachung des Hinweises auf die Patenterteilung: **01.01.2025**
(21) Anmeldenummer: 21710257.3
(22) Anmeldetag: 04.03.2021
(51) Int. Cl.: B21D 51/44, B23P 23/00, B65D 17/50, B65G 15/14

(54) **VORRICHTUNG ZUR HERSTELLUNG VON AUFREISSDECKELN**
APPARATUS FOR PRODUCING TEAR-OFF LIDS
APPAREIL DE PRODUCTION DE COUVERCLES DÉCHIRABLES

(43) Veröffentlichungstag der Anmeldung: 06.12.2023
(73) Patentinhaber: Soudronic AG, 8962 Bergdietikon (CH)
(72) Erfinder: CHEVALLEY, François, 8406 Winterthur (CH); HAAS, Tobias, 8143 Stallikon (CH); JAQUES, Patrick, 2603 Péry (CH)
(74) Vertreter: E. Blum & Co. AG
(86) Internationale Anmeldenummer: PCT/EP2021/055489
(87) Internationale Veröffentlichungsnummer: WO 2022/184262

(56) Entgegenhaltungen:
- EP-A1- 2 151 287
- EP-B1- 1 778 423
- WO-A1-2006/017953
- US-A1- 2007 113 985

## Beschreibung

### Gebiet der Erfindung

Die Erfindung betrifft eine Vorrichtung zur Herstellung von Aufreissdeckeln gemäss dem Oberbegriff von Patentanspruch 1.

### Hintergrund

Aufreissdeckel (sog. Peel Off Ends oder POE) sind bekannt, so z.B. aus DE-U 298 17 592 oder aus DE-U 92 03 953.

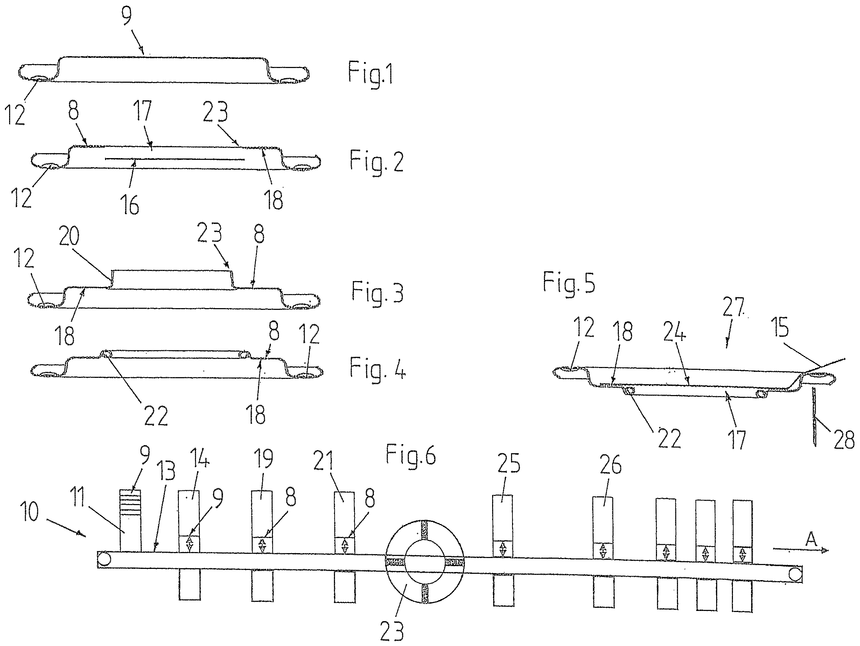

Mit Bezugnahme auf die Figuren 1 bis 6 kann eine dem Fachmann bekannte Herstellung von Aufreissdeckeln nach Stand der Technik kurz erläutert werden.

Figur 1 zeigt einen Deckelrohling 9. Am Anfang des Transportwegs einer bekannten Herstellvorrichtung 10 (siehe Fig. 6) ist ein Stapel 11 gezeigt, der eine Vielzahl von solchen Deckelrohlingen 9 enthält, die einzeln abgestapelt und entlang des Transportwegs von verschiedenen Bearbeitungsstationen 14, 19, 21, 25, 26 bearbeitet werden, wobei aus den Deckelrohlingen 9 zunächst Deckelringe 8 gebildet werden (siehe Fig. 2) und diese dann bis zum fertigen Aufreissdeckel 27 (siehe Fig. 5) weiter bearbeitet werden. Die Deckelrohlinge 9 sind z.B. runde oder ovale Scheiben aus beschichtetem und damit gegen Korrosion geschütztem Metall, insbesondere aus beschichtetem Weissblech oder Aluminiumblech. Sie weisen z.B. einen Durchmesser von 11 cm auf. Diese Rohlinge 9 sind bereits an ihrem Rand 12 durch eine nicht dargestellte Bearbeitungsmaschine vorgeformt worden und die Ausbildung des Randes 12 dient später der Befestigung des fertigen Aufreissdeckels 27 an einem Behälter 28 bzw. einer Dose durch eine Falzverbindung. Dies ist dem Fachmann bekannt und wird hier nicht weiter erläutert.

Die Fördereinrichtung 13, welche die Deckelrohlinge, die Deckelringe und die Aufreissdeckel in der Herstellvorrichtung 10 entlang des Transportweges in Richtung des Pfeils A von einer Bearbeitungsstation zur nächsten Bearbeitungsstation fördert, wird insbesondere von zwei parallel laufenden Zahnriemen gebildet, an denen Aufnahmen für die Deckelrohlinge bzw. Deckelringe vorgesehen sind, wie dem Fachmann aus WO 2006/017953 bekannt. Auch dies wird hier nicht weiter erläutert. Bei den jeweiligen Bearbeitungsstationen nach Stand der Technik, die dem Fachmann bekannt sind und hier nur schematisch dargestellt sind, wird der zu bearbeitende Rohling bzw. Ring jeweils von der Fördereinrichtung abgehoben und von der Bearbeitungsstation bearbeitet und wieder an die Fördereinrichtung zurück gegeben. Dies ist bei den Bearbeitungsstationen mit auf und ab weisenden Pfeilen angedeutet. Bei den Bearbeitungsstationen ist jeweils unterhalb des Fördermittels der Antrieb der Bearbeitungsstationen angedeutet. Dieser dient zum Heben und Senken der Rohlinge und Deckelringe und zur Durchführung der jeweiligen Bearbeitungsschritte.

In einer Stanzbearbeitungsstation 14 wird zunächst aus dem Deckelrohling 9 ein Deckelring 8 gebildet, indem ein mittlerer Teil 16 des Rohlings nach unten ausgestanzt und in der Regel als Abfall entsorgt wird (siehe Fig. 2). Damit wird die Entnahmeöffnung 17 des Aufreissdeckels gebildet, die in einem späteren Herstellungsschritt mit der Aufreissfolie 24 verschlossen wird. An die Entnahmeöffnung 17 anschliessend verbleibt ein Siegelflansch 18. In einer Bearbeitungsstation 19 wird der Rand der Entnahmeöffnung 17 zu einem Kragen 20 nach oben gezogen (siehe Fig. 3). Dieser Kragen 20 wird in einer weiteren Bearbeitungsstation 21 zur Entnahmeöffnung hin oder von dieser weg eingerollt, zu einem sogenannten "Curl". Diese Einrollung 22, die sodann den Rand der Entnahmeöffnung 17 bildet, sorgt dafür, dass der Benützer der Dose bei der Entnahme des Inhalts der Dose vor der scharfkantigen Schnittkante 23 geschützt ist. Je nach Umfang der Einrollung wird diese als "C-Curl" (Schnittkante nicht innerhalb der Einrollung angeordnet) oder als "Retort-Curl" (Schnittkante innerhalb der Einrollung angeordnet) bezeichnet, und "Curls", welche von der Entnahmeöffnung weg eingerollt werden, werden als "Reverse-C-Curl" bzw. als "Reverse-Retort-Curl" bezeichnet. In dem hier gezeigten Fall wird ein sogenannter Retort-Curl 22 gebildet (siehe Fig. 4).

Die bisherigen Herstellungsschritte sind in einer Lage durchgeführt worden, bei welcher die Deckelrohlinge 9 und Deckelringe 8 mit ihrer späteren Oberseite bzw. mit dem Siegelflansch 18 nach unten weisend angeordnet waren. Dies ist eine bevorzugte Ausführung auch bei der vorliegenden Erfindung. Wie erwähnt, wird der Rohling 9 bzw. der Ring 8 in den einzelnen Bearbeitungsstationen 14, 19 und 21 von der Fördereinrichtung 13 abgehoben, bearbeitet und wieder zurück gelegt, worauf die Fördereinrichtung Förderschritte ausführt, welche die Deckelrohlinge 9 bzw. Deckelringe 8 zur nächsten Bearbeitungsstation führt. Werden die Herstellungsschritte, wie dargestellt, mit nach unten weisendem Siegelflansch 18 durchgeführt, so folgt nun eine Wendestation 23, welche die Deckelringe 8 wendet, so dass bei der weiteren Bearbeitung der Siegelflansch 18 nach der Wendestation 23 in der Fördereinrichtung 13 und in den Bearbeitungsstationen 25, 26 oben liegt.

Danach wird die Aufreissfolie 24 auf den Siegelflansch 18 aufgesiegelt, was zweistufig mit einer Vorsiegelstation 25 und einer Hauptsiegelstation 26 erfolgen kann. Auch der Siegelvorgang ist dem Fachmann bekannt und wird hier nicht weiter erläutert. Es können weitere Bearbeitungsstationen folgen, in denen eine Prägung der Siegelfolie 24 erfolgt, die Aufreisslasche 15 positioniert wird und eine Dichtheitsprüfung erfolgt. Auch dies ist dem Fachmann bekannt und wird hier nicht weiter erläutert. Am Ende der bekannten Herstellvorrichtung 10 werden fertige Aufreissdeckel 27 ausgegeben (siehe Fig. 5), deren Entnahmeöffnung 17 von einer Aufreissfolie 24 überspannt ist, die am Siegelflansch 18 aufgesiegelt ist. Der Rand der Entnahmeöffnung 17 wird hier durch den Retort-Curl 22 gebildet. Der fertige Aufreissdeckel 27 kann mittels seines Falzrandes 12 an einem Dosenmantel (der in Figur 5 nur mit einem Wandteil 28 angedeutet ist) befestigt werden und verschliesst somit die Dose. Dies erfolgt im Abfüllbetrieb, in welchem die Dose mit einem Füllgut befüllt worden ist. Die gefüllte Dose kann später geöffnet werden, indem die Aufreissfolie 24 mittels deren Aufreisslasche 15 vom Deckelring 8 weggerissen wird, wodurch die Entnahmeöffnung 17 freigelegt wird.

Die Herstellvorrichtungen 10 für die Aufreissdeckel können einbahnig oder mehrbahnig ausgebildet sein, und als lineare oder rotative Maschinen konzipiert sein.

US 2007/113985 A1 offenbart eine Vorrichtung zur Herstellung von Deckeln mit Aufreissfolie, welche Bearbeitungsstationen mit Hubtischen aufweist, die jeweils an ihren vier Ecken geführt sind.

Ein bisher ungelöstes Problem stellt die schlechte Zugänglichkeit der Bearbeitungszone für Wartungsarbeiten dar, weshalb die heute bekannten Maschinen von beiden Seiten her zugänglich sein müssen.

### Darstellung der Erfindung

Der Erfindung liegt die Aufgabe zu Grunde, Vorrichtung zur Herstellung von Aufreissdeckeln zur Verfügung zu stellen, bei denen die Bearbeitungszone deutlich besser zugänglich ist für Wartungsarbeiten als bei den heute bekannten gattungsgemässen Vorrichtungen.

Diese Aufgabe wird durch die Vorrichtung gemäss Patentanspruch 1 gelöst.

Gemäss diesem betrifft die Erfindung eine Vorrichtung zur Herstellung von Aufreissdeckeln, bei welchen auf deren Oberseite eine Aufreissfolie auf einer um eine Entnahmeöffnung angeordneten Siegelfläche aufgesiegelt oder aufgeklebt ist. Die Vorrichtung, oft auch als "Siegelmaschine" bezeichnet, umfasst eine Fördereinrichtung für Deckelrohlinge, Deckelringe und Aufreissdeckel sowie Bearbeitungsstationen, welche in Förderrichtung aufeinander folgend zur Bearbeitung der Deckelrohlinge, Deckelringe und Aufreissdeckel vorgesehen sind und eine sich in Förderrichtung erstreckende Bearbeitungszone der Vorrichtung bilden. Zumindest ein Teil der Bearbeitungsstationen weist Hubtische auf zur Aufnahme von unteren Bearbeitungswerkzeugen, welche im bestimmungsgemässen Betrieb der Vorrichtung entlang von Hubtisch-Führungen eine intermittierende Aufwärts- und Abwärtsbewegung ausführen und dabei mit den unteren Bearbeitungswerkzeugen von unten gegen zugeordnete obere Bearbeitungswerkzeuge arbeiten, die an feststehenden Jochen abgestützt sind.

Erfindungsgemäss sind die Hubtisch-Führungen in Förderrichtung gesehen in einem Bereich neben der Bearbeitungszone der Vorrichtung angeordnet, und zwar auf genau einer von den beiden Seiten der Bearbeitungszone.

Hierdurch bleibt der Bereich auf der anderen Seite der Bearbeitungszone weitestgehend unverbaut, und es ergibt sich eine hervorragende Zugänglichkeit der Bearbeitungszone für Kontrollzwecke und Wartungsarbeiten.

Bevorzugterweise ist die Vorrichtung zudem derartig ausgebildet, dass zumindest ein Teil der Joche für Wartungszwecke entlang von Joch-Führungen verschoben werden kann, welche in Förderrichtung gesehen in einem Bereich neben der Bearbeitungszone der Vorrichtung angeordnet sind.

Dabei ist es weiter bevorzugt, dass die Joch-Führungen auf genau einer von den beiden Seiten der Bearbeitungszone angeordnet sind, mit Vorteil auf derjenigen Seite, auf welcher auch die Hubtisch-Führungen angeordnet sind. Hierdurch kann ein Verfahren der Joche entlang von Führungen für Wartungs- oder Kontrollzwecke realisiert werden, ohne die Zugänglichkeit zu beinträchtigen.

Im letztgenannten Fall ist es weiter bevorzugt, dass die Hubtisch-Führungen und die Joch-Führungen zumindest teilweise als gemeinsame Hubtisch-Joch-Führungen ausgebildet sind.

Besonders bevorzugt ist es, dass sämtliche Joch-Führungen als gemeinsame Hubtisch-Joch-Führungen ausgebildet sind.

Hierdurch lassen sich Kosten und Bauraum sparen.

Mit Vorteil sind die Bearbeitungsstationen der erfindungsgemässen Vorrichtung auf einem gemeinsamen, bevorzugterweise unteilbaren Maschinengestell angeordnet. Auf diese Weise wird die Montage, Prüfung und Inbetriebsetzung der Vorrichtung deutlich erleichtert. Das Ausrichten der Stationsmodule zueinander kann bereits in der Fabrik erfolgen.

Dabei ist es bevorzugt, dass das Maschinengestell in Förderrichtung gesehen einen im Wesentlichen L-förmigen oder T-förmigen Querschnitt aufweist, mit einer horizontalen Grundplatte und einer senkrecht davon hochstehenden Mittenwand oder Rückwand, welche einen Teil der tragenden Struktur des Maschinengestelles bildet. Diese Mitten- oder Rückwand ist dann geeignet für die Übernahme von Trag- und Positionierungsfunktionen.

Entsprechend ist es bei einer bevorzugten Ausführungsform einer solchen erfindungsgemässen Vorrichtung vorgesehen, dass die Hubtisch-Führungen und mit Vorteil auch die Joch-Führungen an der Mittenwand oder Rückwand befestigt sind.

In einer weiteren bevorzugten Ausführungsform weist die Vorrichtung eine lineare Bearbeitungszone auf, ist also als lineare Maschine konzipiert, und ist bevorzugterweise einbahnig ausgebildet.

Dabei ist es für den Fall, dass die Bearbeitungsstationen der erfindungsgemässen Vorrichtung auf einem gemeinsamen Maschinengestell angeordnet sind welches in Förderrichtung gesehen einen im Wesentlichen L-förmigen oder T-förmigen Querschnitt aufweist, weiter bevorzugt, dass die Vorrichtung einen Steuerschrank umfasst, welcher auf der den Bearbeitungsstationen abgewandten Seite der Mittenwand oder Rückwand angeordnet ist. Dieser Steuerschrank kann bereits in der Fabrik fest auf dem Maschinengestellt installiert und verdrahtet werden, was eine enorme Zeitersparnis bei der Installation, Prüfung, Spedition und Inbetriebsetzung ermöglicht.

In einer weiteren bevorzugten Ausführungsform ist jeder Hubtisch genau einem unteren Bearbeitungswerkzeug zugeordnet.

Auch ist es bevorzugt, dass zumindest ein Teil der unteren Bearbeitungswerkzeuge mit Schnellspann-Verschlusssystemen auf dem jeweiligen Hubtisch befestigt ist, insbesondere mit einem Nullpunkt-Spannsystemen. Derartige Spannsysteme werden z.B. unter dem Produktenamen "ROEMHELD SPEEDY metec" von der Firma STARK Spannsysteme GmbH in Österreich angeboten. Hierdurch wird der Werkzeugwechsel deutlich erleichtert.

In noch einer weiteren bevorzugten Ausführungsform ist zumindest ein Teil der Joche mehreren Hubtischen zugeordnet. Auf diese Weise kann der anlagentechnische Aufwand gesenkt und die Zugänglichkeit weiter verbessert werden.

In noch einer weiteren bevorzugten Ausführungsform umfasst die erfindungsgemässe Vorrichtung einzelne Bearbeitungsstationen für die Bearbeitungsschritte Stanzen, Ziehen, Rollen, Vorsiegeln, Hauptsiegeln und Prägen.

Dabei ist es von Vorteil, dass die Hubtische der Bearbeitungsstationen für die Bearbeitungsschritte Ziehen und Rollen und/oder die Hubtische der Bearbeitungsstationen für die Bearbeitungsschritte Vorsiegeln und Hauptsiegeln jeweils gegen ein gemeinsames Joch arbeiten.

Auch ist es dabei von Vorteil, dass der Hubtisch der Bearbeitungsstation für den Bearbeitungsschritt Stanzen und/oder der Hubtisch der Bearbeitungsstation für den Bearbeitungsschritt Prägen jeweils gegen ein eigenes nur diesem Hubtisch zugeordnetes Joch arbeitet.

Zudem ist es dabei auch bevorzugt, dass die Hubtische der Bearbeitungsstationen für die Bearbeitungsschritte Stanzen, Ziehen und Rollen und/oder die Hubtische der Bearbeitungsstationen für die Bearbeitungsschritte Hauptsiegeln und Prägen jeweils über einen gemeinsamen Antrieb verfügen, insbesondere jeweils über einen gemeinsamen Servomotor.

Des Weiteren ist es dabei auch von Vorteil, dass der Hubtisch der Bearbeitungsstation für den Bearbeitungsschritt Vorsiegeln über einen eigenen Antrieb verfügt, insbesondere über einen eigenen Servomotor.

Mit diesen zuvor erwähnten Massnahmen kann der anlagentechnische Aufwand gesenkt und die Zugänglichkeit weiter verbessert werden, ohne Einbussen bei der Fertigungspräzision in Kauf nehmen zu müssen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Vertikalschnitt durch einen Deckelrohling 9;
die Figuren 2 bis 4 Vertikalschnitte durch einen Deckelring 8 in unterschiedlich weit fortgeschrittenen Fertigungsstadien;
Fig. 5 einen Vertikalschnitt durch einen fertiggestellten Aufreissdeckel 27;
Fig. 6 eine schematische Seitenansicht einer Vorrichtung nach Stand der Technik zur Herstellung von Aufreissdeckeln bzw. zur Durchführung der Schritte gemäss den Figuren 1 bis 5;
Fig. 7 eine perspektivische Ansicht auf die Bedienerseite einer erfindungsgemässen Vorrichtung zur Herstellung von Aufreissdeckeln;
Fig. 8 eine perspektivische Ansicht auf die Vorrichtung aus Fig. 7 bei entfernten Verkleidungen;
Fig. 9 eine Darstellung wie Fig. 8 bei zusätzlich entfernten Fördereinrichtungen;
Fig. 10 eine Darstellung wie Fig. 9 bei zusätzlich entfernten Stationsrahmen;
Fig. 11 eine perspektivische Ansicht auf die Rückseite der Vorrichtung aus Fig. 10;
Fig. 12 eine perspektivische Ansicht der Kombinierten Hubtisch- und Jochführung der Stanzstation der Vorrichtung aus den Figuren 7 bis 11; und
Fig. 13 eine perspektivische Ansicht der Kombinierten Hubtisch- und Jochführungen der Ziehstation und der Rollstation der Vorrichtung aus den Figuren 7 bis 11.

### Wege zur Ausführung der Erfindung

Einleitend ist mit Bezugnahme auf die Figuren 1 bis 6 die dem Fachmann bekannte Herstellung von Aufreissdeckeln 27 nach dem Stand der Technik erläutert worden. Auf diese Erläuterung wird hier verwiesen, um auf eine Wiederholung zu verzichten.

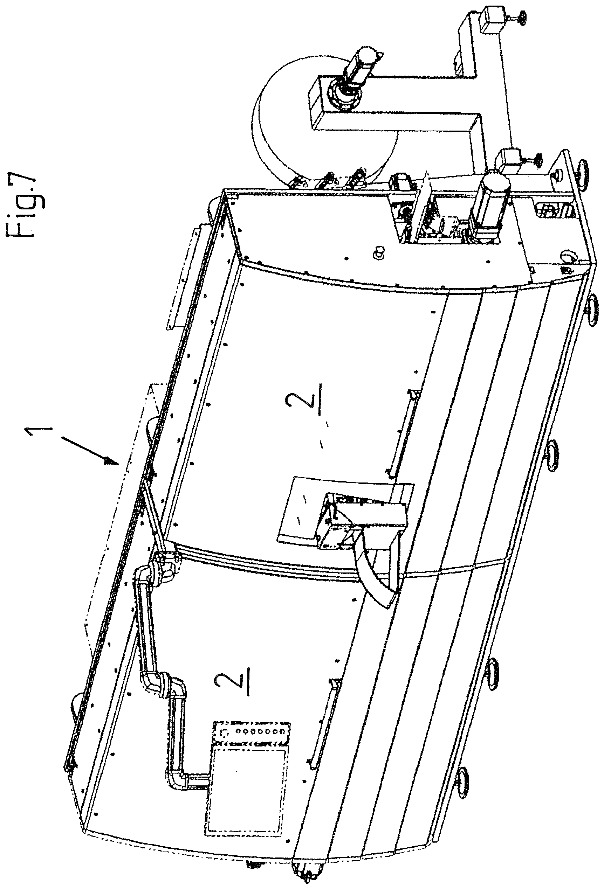

Fig. 7 zeigt eine perspektivische Ansicht auf die Bedienerseite einer erfindungsgemässen Vorrichtung 1 zur Herstellung von Aufreissdeckeln 27, bei welchen auf deren Oberseite eine Aufreissfolie 24 auf einer um eine Entnahmeöffnung 17 angeordneten Siegelfläche 8 aufgesiegelt oder aufgeklebt ist. Wie zu erkennen ist, ist die Bearbeitungszone der Vorrichtung 1 vollständig verkleidet und auf der Bedienerseite von zwei nach oben schwenkbaren Türen 2 mit Glasfronten von der Umgebung abgetrennt.

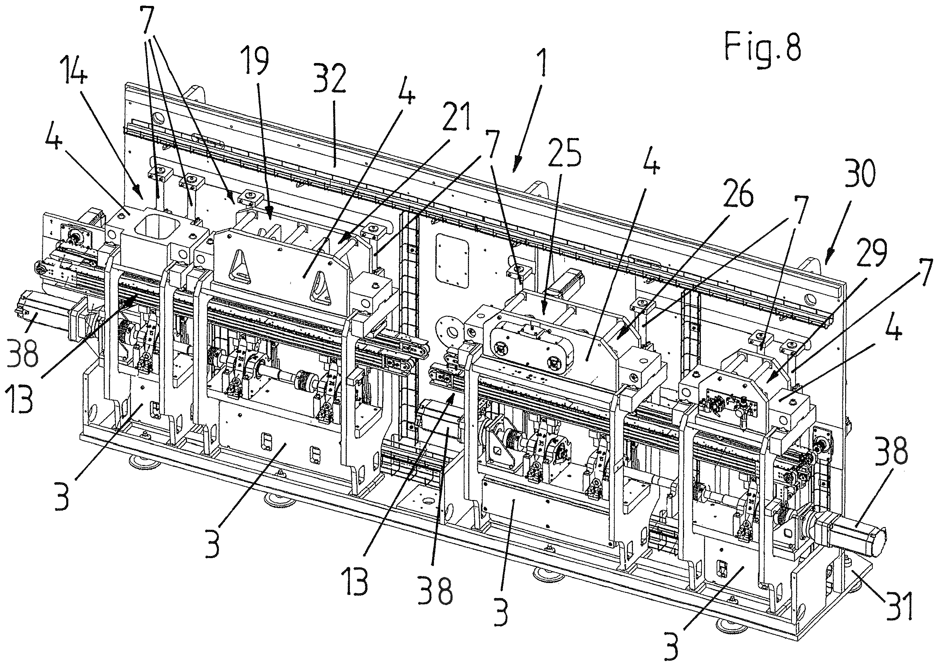

Fig. 8 zeigt eine perspektivische Ansicht auf die Vorrichtung! aus Fig. 7 bei entfernten Verkleidungen und Türen 2. Wie zu erkennen ist, ist die Vorrichtung einbahnig ausgebildet und umfasst eine Fördereinrichtung 13 für Deckelrohlinge 9, Deckelringe 8 und Aufreissdeckel 27 sowie Bearbeitungsstationen 14, 21, 25, 26, 29, welche in Förderrichtung (von links nach rechts) aufeinander folgend zur Bearbeitung der Deckelrohlinge 9, Deckelringe 8 und Aufreissdeckel 27 vorgesehen sind und eine sich in Förderrichtung erstreckende lineare Bearbeitungszone der Vorrichtung bilden. Die Wendestation ist nicht dargestellt.

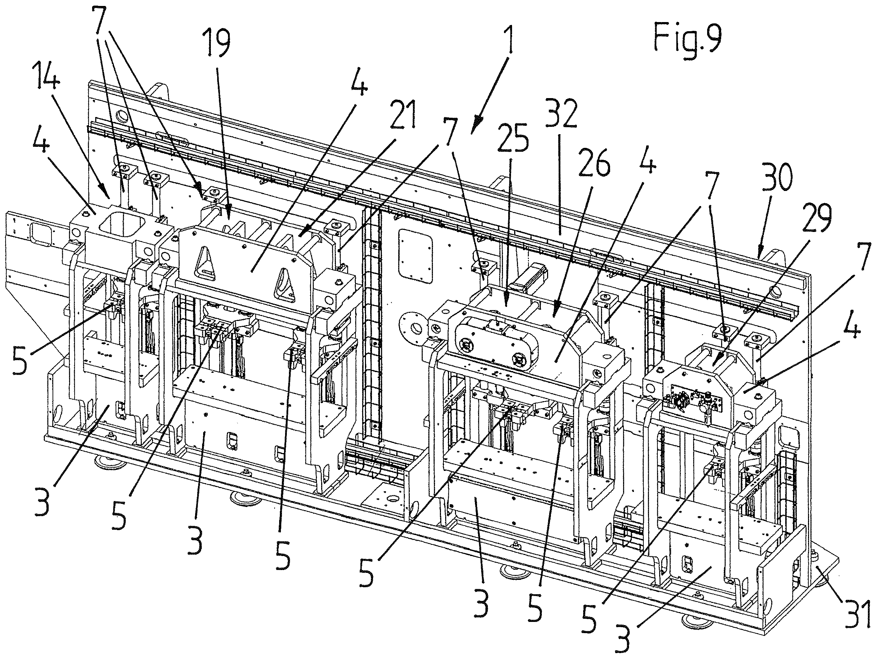

Wie in Zusammenschau mit Fig. 9 erkennbar ist, welche eine Darstellung wie Fig. 8 zeigt wobei jedoch zusätzlich die Fördereinrichtungen 13 und die Stationsantriebe entfernt sind, sind die Bearbeitungsstationen 14, 21, 25, 26, 29 in Stationsrahmen 3 mit Jochen 4 gebildet, und weisen Hubtische 5 zur Aufnahme der unteren Bearbeitungswerkzeuge (nicht gezeigt) auf. Dabei ist jeder Hubtisch 5 genau einem unteren Bearbeitungswerkzeug zugeordnet, welches mit Schnellspann-Verschlusssystemen auf dem jeweiligen Hubtisch befestigt ist. Die Bearbeitungsstationen 14 und 29 weisen jeweils ein eigenes Joch 4 auf. Die Bearbeitungsstationen 19 und 21 sowie 25 und 26 teilen sich jeweils ein gemeinsames Joch 4.

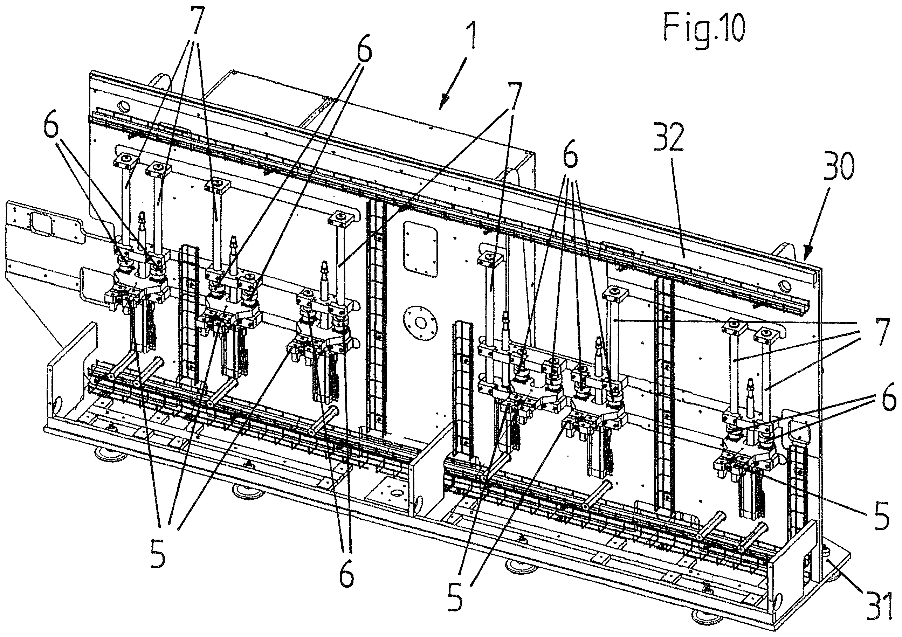

Wie in weiterer Zusammenschau mit Fig. 10 erkennbar ist, welche eine Darstellung wie Fig. 9 zeigt wobei jedoch zusätzlich noch die Stationsrahmen 3 mit den Jochen 4 entfernt sind, sind die Hubtische 5 mit Hubtisch-Führungen 6 versehen, entlang welchen sie im bestimmungsgemässen Betrieb der Vorrichtung eine intermittierende Aufwärts- und Abwärtsbewegung ausführen und dabei mit den unteren Bearbeitungswerkzeugen von unten gegen zugeordnete obere Bearbeitungswerkzeuge (ebenfalls nicht gezeigt) arbeiten, die an feststehenden Jochen 4 abgestützt sind.

Die Joche 4 sind mit Joch-Führungen 7 versehen, entlang welchen sie für Wartungszwecke verschoben werden können. Sie sind mit Schnellspann-Verschlusssystemen auf den Stationsrahmen 3 befestigt.

Die Hubtisch-Führungen 6 und die Joch-Führungen 7 sind hier ganz oder teilweise als gemeinsame Hubtisch-Joch-Führungen 6, 7 ausgebildet und in Förderrichtung (von links nach rechts) gesehen in einem Bereich neben der Bearbeitungszone der Vorrichtung angeordnet, und zwar auf der der Bedienerseite abgewandten Seite der Bearbeitungszone.

Wie weiter zu erkennen ist, sind die Bearbeitungsstationen 14, 21, 25, 26, 29 auf einem gemeinsamen, unteilbaren Maschinengestell 30 angeordnet, welches in Förderrichtung gesehen einen im Wesentlichen T-förmigen Querschnitt aufweist, mit einer horizontalen Grundplatte 31 und einer senkrecht davon hochstehenden Mittenwand 32, welche einen Teil der tragenden Struktur des Maschinengestelles 30 bildet. Die Hubtisch-Führungen 6 und die Joch-Führungen 7 sind an der Mittenwand 32 befestigt.

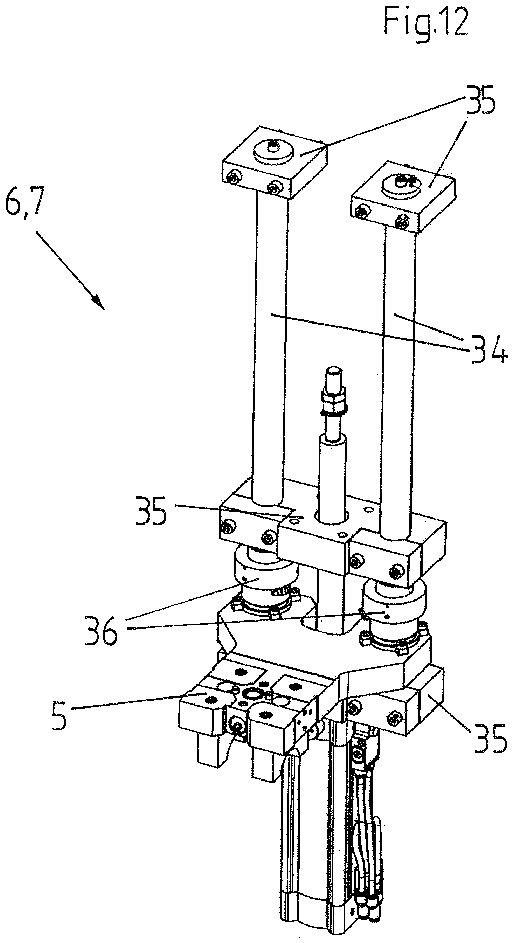

Fig. 12 zeigt eine perspektivische Ansicht der kombinierten Hubtisch- und Jochführung 6, 7 der Stanzstation 14 und der Prägestation 29. Wie zu erkennen ist, weisen diese Führungen 6,7 jeweils zwei lange Führungsstangen 34 auf, welche mit Befestigungskörpern 35 auf der Mittenwand 32 befestigt sind. Auf dem unteren Teil der Führungsstangen 34 laufen die Führungsbuchsen 36 des Hubtisches 5, und auf dem oberen, in der Darstellung freiliegenden Teil der Führungsstangen 34 die Führungsbuchsen des Jochs (nicht gezeigt).

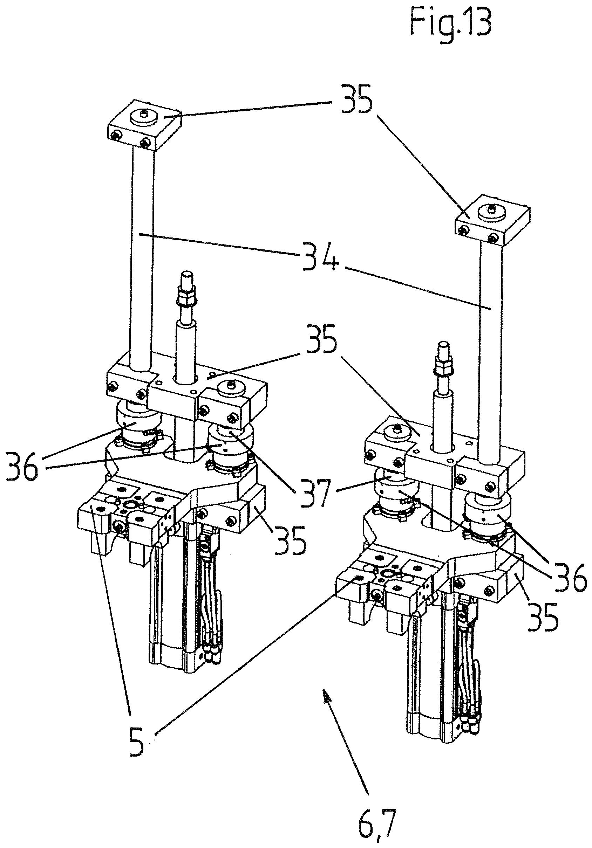

Fig. 13 zeigt eine perspektivische Ansicht der kombinierten Hubtisch- und Jochführungen 6, 7 der Ziehstation 19 und der Rollstation 21. Wie zu erkennen ist, weisen diese Führungen 6,7 zusammen zwei lange Führungsstangen 34 und zwei kurze Führungsstangen 37 auf, welche mit Befestigungskörpern 35 auf der Mittenwand 32 befestigt sind. Auf dem unteren Teil der langen Führungsstangen 34 sowie auf den kurzen Führungsstangen 37 laufen die Führungsbuchsen 36 der beiden Hubtische 5, und auf dem oberen, in der Darstellung freiliegenden Teil der langen Führungsstangen 34 laufen die Führungsbuchsen des gemeinsamen Jochs (nicht gezeigt).

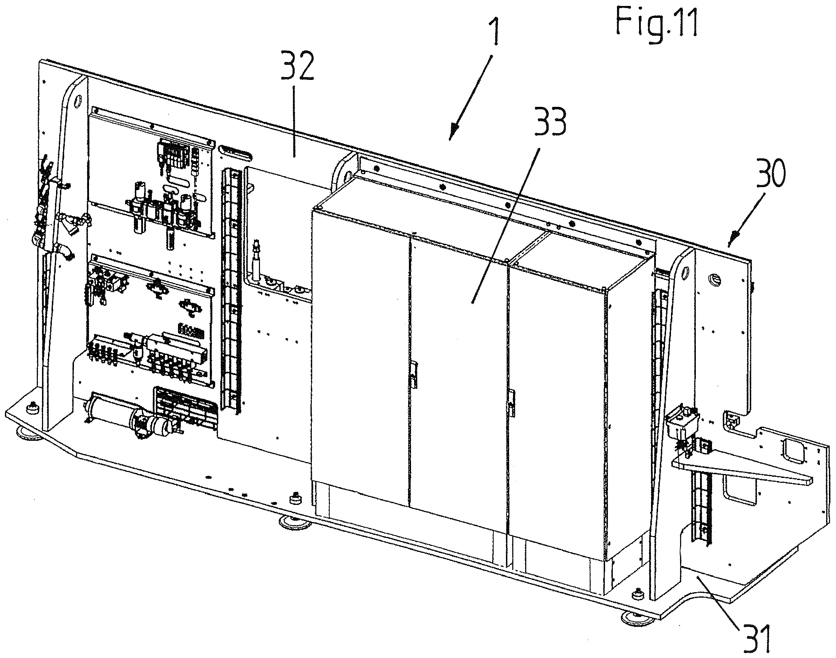

Wie aus Fig. 11 erkennbar ist, welche eine perspektivische Ansicht auf die Rückseite der Vorrichtung aus Fig. 10 zeigt, umfasst die Vorrichtung einen Steuerschrank 33, welcher auf der den Bearbeitungsstationen 14, 19, 21, 25, 26, 29 abgewandten Seite der Mittenwand 32 angeordnet ist.

Die Bearbeitungsstationen 14, 19, 21, 25, 26, 29 führen die folgenden Bearbeitungsschritte aus: Stanzen (Bearbeitungsstation 14), Ziehen (Bearbeitungsstation 19), Rollen (Bearbeitungsstation 21), Vorsiegeln (Bearbeitungsstation 25), Hauptsiegeln (Bearbeitungsstation 26) und Prägen (Bearbeitungsstation 29).

Die Hubtische 5 der Bearbeitungsstationen 19 und 21 für die Bearbeitungsschritte Ziehen und Rollen und/oder die Hubtische 5 der Bearbeitungsstationen 25 und 25 für die Bearbeitungsschritte Vorsiegeln und Hauptsiegeln arbeiten jeweils gegen ein gemeinsames Joch 4.

Der Hubtisch 5 der Bearbeitungsstation 14 für den Bearbeitungsschritt Stanzen und der Hubtisch 5 der Bearbeitungsstation 29 für den Bearbeitungsschritt Prägen arbeiten jeweils gegen ein eigenes nur diesem Hubtisch 5 zugeordnetes Joch 4.

Wie aus Fig. 8 ersichtlich ist, verfügen die Hubtische 5 der Bearbeitungsstationen 14, 19 und 21 für die Bearbeitungsschritte Stanzen, Ziehen und Rollen und die Hubtische 5 der Bearbeitungsstationen 26 und 29 für die Bearbeitungsschritte Hauptsiegeln und Prägen jeweils über einen gemeinsamen Antrieb mit einem gemeinsamen Servomotor 38, während der Hubtisch 5 der Bearbeitungsstation 25 für den Bearbeitungsschritt Vorsiegeln über einen eigenen Antrieb mit Servomotor 38 verfügt.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Ansprüche ausgeführt werden kann.

## Patentansprüche

1. Vorrichtung (1) zur Herstellung von Aufreissdeckeln (27), bei welchen auf deren Oberseite eine Aufreissfolie (24) auf einer um eine Entnahmeöffnung (17) angeordneten Siegelfläche (18) aufgesiegelt oder aufgeklebt ist,
umfassend eine Fördereinrichtung (13) für Deckelrohlinge (9), Deckelringe (8) und Aufreissdeckel (27) sowie Bearbeitungsstationen (14, 19, 21, 25, 26, 29) welche in Förderrichtung aufeinander folgend zur Bearbeitung der Deckelrohlinge (9), Deckelringe (8) und Aufreissdeckel (27) vorgesehen sind und eine sich in Förderrichtung erstreckende Bearbeitungszone der Vorrichtung (1) bilden,
wobei zumindest ein Teil der Bearbeitungsstationen (14, 19, 21, 25, 26, 29) Hubtische (5) aufweist zur Aufnahme von unteren Bearbeitungswerkzeugen, welche im bestimmungsgemässen Betrieb der Vorrichtung (1) entlang von Hubtisch-Führungen (6) eine intermittierende Aufwärts- und Abwärtsbewegung ausführen und dabei mit den unteren Bearbeitungswerkzeugen von unten gegen zugeordnete obere Bearbeitungswerkzeuge arbeiten, die an feststehenden Jochen (4) abgestützt sind,
**dadurch gekennzeichnet, dass** die Hubtisch-Führungen (6) in Förderrichtung gesehen in einem Bereich neben der Bearbeitungszone der Vorrichtung (1) angeordnet sind, auf genau einer von den beiden Seiten der Bearbeitungszone.

2. Vorrichtung (1) nach Anspruch 1, wobei zumindest ein Teil der Joche (4) für Wartungszwecke entlang von Joch-Führungen (7) verschoben werden kann, welche in Förderrichtung gesehen in einem Bereich neben der Bearbeitungszone der Vorrichtung (1) angeordnet sind.

3. Vorrichtung (1) nach Anspruch 2, wobei die Joch-Führungen (7) auf genau einer von den beiden Seiten der Bearbeitungszone angeordnet sind, insbesondere auf derjenigen Seite, auf welcher die Hubtisch-Führungen (6) angeordnet sind.

4. Vorrichtung (1) nach Anspruch 3, wobei die Hubtisch-Führungen (6) und die Joch-Führungen (7) zumindest teilweise als gemeinsame Hubtisch-Joch-Führungen (6, 7) ausgebildet sind.

5. Vorrichtung nach Anspruch 4, wobei sämtliche Joch-Führungen als gemeinsame Hubtisch-Joch-Führungen ausgebildet sind.

6. Vorrichtung (1) nach einem der vorangehenden Ansprüche, wobei die Bearbeitungsstationen (14, 19, 21, 25, 26, 29) auf einem gemeinsamen, insbesondere unteilbaren Maschinengestell (30) angeordnet sind.

7. Vorrichtung (1) nach Anspruch 6, wobei das Maschinengestell (30) in Förderrichtung gesehen einen im Wesentlichen L-förmigen oder T-förmigen Querschnitt aufweist, mit einer horizontalen Grundplatte (31) und einer senkrecht davon hochstehenden Mittenwand (32) oder Rückwand, welche einen Teil der tragenden Struktur des Maschinengestelles (30) bildet.

8. Vorrichtung (1) nach Anspruch 2 und nach Anspruch 7, wobei die Hubtisch-Führungen (6) und insbesondere auch die Joch-Führungen (7) an der Mittenwand (32) oder Rückwand befestigt sind.

9. Vorrichtung (1) nach einem der vorangehenden Ansprüche, wobei die Vorrichtung eine lineare Bearbeitungszone aufweist, und insbesondere, wobei die Vorrichtung einbahnig ausgebildet ist.

10. Vorrichtung (1) nach einem der Ansprüche 7 bis 8 und nach Anspruch 9, wobei die Vorrichtung einen Steuerschrank (33) umfasst, welcher auf der den Bearbeitungsstationen (14, 19, 21, 25, 26, 29) abgewandten Seite der Mittenwand (32) oder Rückwand angeordnet ist.

11. Vorrichtung (1) nach einem der vorangehenden Ansprüche, wobei jeder Hubtisch (5) genau einem unteren Bearbeitungswerkzeug zugeordnet ist.

12. Vorrichtung (1) nach einem der vorangehenden Ansprüche, wobei zumindest ein Teil der unteren Bearbeitungswerkzeuge mit Schnellspann-Verschlusssystemen auf dem jeweiligen Hubtisch (5) befestigt ist, insbesondere mit Nullpunkt-Spannsystemen.

13. Vorrichtung (1) nach einem der vorangehenden Ansprüche, wobei zumindest ein Teil der Joche (4) für Wartungszwecke entlang von Joch-Führungen (7) verschoben werden kann, und zumindest ein Teil dieser Joche (4) mit Schnellspann-Verschlusssystemen befestigt ist, insbesondere mit Nullpunkt-Spannsystemen.

14. Vorrichtung (1) nach einem der vorangehenden Ansprüche, wobei zumindest ein Teil der Joche (4) mehreren Hubtischen (5) zugeordnet ist.

15. Vorrichtung (1) nach einem der vorangehenden Ansprüche, umfassend einzelne Bearbeitungsstationen (14, 19, 21, 25, 26, 29) für die folgenden Bearbeitungsschritte: Stanzen, Ziehen, Rollen, Vorsiegeln, Hauptsiegeln, Prägen.

16. Vorrichtung (1) nach Anspruch 14 und nach Anspruch 15, wobei die Hubtische (5) der Bearbeitungsstationen (19, 21) für die Bearbeitungsschritte Ziehen und Rollen und/oder die Hubtische (5) der Bearbeitungsstationen (25, 26) für die Bearbeitungsschritte Vorsiegeln und Hauptsiegeln jeweils gegen ein gemeinsames Joch (4) arbeiten.

17. Vorrichtung (1) nach einem der Ansprüche 15 bis 16, wobei der Hubtisch (5) der Bearbeitungsstation (14) für den Bearbeitungsschritt Stanzen und/oder der Hubtisch (5) der Bearbeitungsstation (29) für den Bearbeitungsschritt Prägen jeweils gegen ein eigenes nur diesem Hubtisch (5) zugeordnetes Joch (4) arbeitet.

18. Vorrichtung (1) nach einem der Ansprüche 15 bis 17, wobei die Hubtische (5) der Bearbeitungsstationen (14, 19, 21) für die Bearbeitungsschritte Stanzen, Ziehen und Rollen und/oder die Hubtische (5) der Bearbeitungsstationen (26, 29) für die Bearbeitungsschritte Hauptsiegeln und Prägen jeweils über einen gemeinsamen Antrieb (38) verfügen, insbesondere jeweils über einen gemeinsamen Servomotor (38).

19. Vorrichtung (1) nach einem der Ansprüche 15 bis 18, wobei der Hubtisch (5) der Bearbeitungsstation (25) für den Bearbeitungsschritt Vorsiegeln über einen eigenen Antrieb (38) verfügt, insbesondere über einen eigenen Servomotor (38).

## Claims

1. Apparatus (1) for the production of tear-off lids (27), in which a tear-off film (24) is sealed or glued onto the upper side thereof on a sealing surface (18) arranged around a removal opening (17),
comprising a conveying device (13) for lid blanks (9), lid rings (8) and tear-off lids (27) as well as processing stations (14, 19, 21, 25, 26, 29) which are provided in succession in the conveying direction for processing the lid blanks (9), lid rings (8), and tear-off lids (27) and form a processing zone of the apparatus (1) extending in the conveying direction,
wherein at least some of the processing stations (14, 19, 21, 25, 26, 29) have lifting tables (5) for receiving lower machining tools which, in the intended operation of the apparatus (1), execute an intermittent upward and downward movement along lifting table guides (6) and, in so doing, work with the lower machining tools from below against associated upper machining tools which are supported on stationary yokes (4),
**characterized in that** the lifting table guides (6) are arranged in an area adjacent to the processing zone of the apparatus (1), on exactly one of the two sides of the processing zone, as seen in the conveying direction.

2. Apparatus (1) according to claim 1,
wherein at least a part of the yokes (4) can be displaced for maintenance purposes along yoke guides (7), which are arranged in an area adjacent to the processing zone of the apparatus (1) as seen in the conveying direction.

3. Apparatus (1) according to claim 2,
wherein the yoke guides (7) are arranged on exactly one of the two sides of the processing zone, in particular on the side on which the lifting table guides (6) are arranged.

4. Apparatus (1) according to claim 3,
wherein the lifting table guides (6) and the yoke guides (7) are at least partially formed as common lifting table-yoke guides (6, 7).

5. Apparatus according to claim 4, wherein all yoke guides are formed as common lifting table-yoke guides.

6. Apparatus (1) according to one of the preceding claims, wherein the processing stations (14, 19, 21, 25, 26, 29) are arranged on a common, in particular indivisible machine frame (30).

7. Apparatus (1) according to claim 6,
wherein the machine frame (30) has a substantially L-shaped or T-shaped cross-section as seen in the conveying direction, with a horizontal base plate (31) and a center wall (32) or rear wall rising perpendicularly therefrom, which forms part of the support structure of the machine frame (30).

8. Apparatus (1) according to claim 2 and claim 7, wherein the lifting table guides (6) and in particular also the yoke guides (7) are fastened to the center wall (32) or rear wall.

9. Apparatus (1) according to one of the preceding claims, wherein the apparatus comprises a linear processing zone, and in particular wherein the apparatus is of single-lane design.

10. Apparatus (1) according to any one of claims 7 to 8 and according to claim 9, wherein the apparatus comprises a control cabinet (33) which is arranged on the side of the center wall (32) or rear wall facing away from the processing stations (14, 19, 21, 25, 26, 29) .

11. Apparatus (1) according to one of the preceding claims, wherein each lifting table (5) is assigned to exactly one lower machining tool.

12. Apparatus (1) according to one of the preceding claims, wherein at least a part of the lower machining tools is fastened to the respective lifting table (5) with quick-release fastening systems, in particular with zero-point clamping systems.

13. Apparatus (1) according to one of the preceding claims, wherein at least a part of the yokes (4) can be displaced along yoke guides (7) for maintenance purposes, and at least a part of these yokes (4) is fastened with quick-release fastening systems, in particular with zero-point clamping systems.

14. Apparatus (1) according to one of the preceding claims, wherein at least a part of the yokes (4) is assigned to several lifting tables (5).

15. Apparatus (1) according to one of the preceding claims, comprising individual processing stations (14, 19, 21, 25, 26, 29) for the following processing steps: punching, drawing, rolling, pre-sealing, main sealing, embossing.

16. Apparatus (1) according to claim 14 and according to claim 15, wherein the lifting tables (5) of the processing stations (19, 21) for the processing steps drawing and rolling and/or the lifting tables (5) of the processing stations (25, 26) for the processing steps pre-sealing and main sealing each operate against a common yoke (4) .

17. Apparatus (1) according to one of claims 15 to 16, wherein the lifting table (5) of the processing station (14) for the processing step punching and/or the lifting table (5) of the processing station (29) for the processing step embossing each operates against its own yoke (4) assigned only to this lifting table (5).

18. Apparatus (1) according to one of claims 15 to 17, wherein the lifting tables (5) of the processing stations (14, 19, 21) for the processing steps punching, drawing and rolling and/or the lifting tables (5) of the processing stations (26, 29) for the processing steps main sealing and embossing each have a common drive (38), in particular each using a common servo motor (38).

19. Apparatus (1) according to one of claims 15 to 18, wherein the lifting table (5) of the processing station (25) for the processing step pre-sealing has its own drive (38), in particular using its own servo motor (38) .

## Revendications

1. Dispositif (1) pour la fabrication de couvercles arrachables (27), dans lesquels une feuille arrachable (24) est scellée ou collée sur leur face supérieure, sur une surface de scellement (18) disposée autour d'une ouverture de prélèvement (17),
comprenant un dispositif de transport (13) pour des ébauches de couvercles (9), des anneaux de couvercles (8) et des couvercles arrachables (27) ainsi que des stations de traitement (14, 19, 21, 25, 26, 29) qui sont prévues pour traiter les ébauches de couvercles (9), les anneaux de couvercles (8) et les couvercles arrachables (27) en se suivant dans la direction de transport et qui forment une zone de traitement du dispositif (1) s'étendant dans la direction de transport,
au moins une partie des stations de traitement (14, 19, 21, 25, 26, 29) présentant des tables élévatrices (5) destinées à recevoir des outils d'usinage inférieurs qui, lors du fonctionnement conforme du dispositif (1), effectuent un mouvement intermittent vers le haut et vers le bas le long de guides de table élévatrice (6) et travaillent alors avec les outils d'usinage inférieurs par le bas contre des outils d'usinage supérieurs associés qui sont soutenus sur des culasses fixes (4),
**caractérisé en ce que** les guides de la table élévatrice (6) sont disposés, vu dans la direction de transport, dans une zone adjacente à la zone d'usinage du dispositif (1), sur exactement un des deux côtés de la zone d'usinage.

2. Dispositif (1) selon la revendication 1, dans lequel au moins une partie des culasses (4) peut être déplacée à des fins de maintenance le long de guides de culasse (7) qui, vus dans la direction de transport, sont disposés dans une zone adjacente à la zone de traitement du dispositif (1).

3. Dispositif (1) selon la revendication 2, dans lequel les guides de culasse (7) sont disposés exactement sur l'un des deux côtés de la zone de traitement, en particulier sur le côté sur lequel sont disposés les guides de table élévatrice (6).

4. Dispositif (1) selon la revendication 3, dans lequel les guides de la table élévatrice (6) et les guides de culasse (7) sont conçus au moins partiellement comme des guides communs de la table élévatrice et de la culasse (6, 7).

5. Dispositif selon la revendication 4, dans lequel tous les guides de culasse sont conçus comme des guides communs de table élévatrice et de culasse.

6. Dispositif (1) selon l'une des revendications précédentes, dans lequel les stations de traitement (14, 19, 21, 25, 26, 29) sont disposées sur un bâti de machine (30) commun, en particulier indivisible.

7. Dispositif (1) selon la revendication 6, dans lequel le bâti de machine (30) présente, vu dans la direction de transport, une section transversale sensiblement en forme de L ou de T, avec une plaque de base horizontale (31) et une paroi centrale (32) ou une paroi arrière s'élevant perpendiculairement à celle-ci, qui forme une partie de la structure porteuse du bâti de machine (30).

8. Dispositif (1) selon la revendication 2 et selon la revendication 7, dans lequel les guides de la table élévatrice (6) et en particulier aussi les guides de culasse (7) sont fixés à la paroi centrale (32) ou à la paroi arrière.

9. Dispositif (1) selon l'une des revendications précédentes, dans lequel le dispositif comporte une zone d'usinage linéaire, et en particulier dans lequel le dispositif est à voie unique.

10. Dispositif (1) selon l'une des revendications 7 à 8 et selon la revendication 9, dans lequel le dispositif comprend une armoire de commande (33) qui est disposée du côté de la paroi centrale (32) ou de la paroi arrière opposé aux stations de traitement (14, 19, 21, 25, 26, 29) .

11. Dispositif (1) selon l'une des revendications précédentes, dans lequel chaque table élévatrice (5) est associée exactement à un outil d'usinage inférieur.

12. Dispositif (1) selon l'une des revendications précédentes, dans lequel au moins une partie des outils d'usinage inférieurs est fixée sur la table élévatrice (5) respective par des systèmes de fermeture à serrage rapide, en particulier par des systèmes de serrage à point zéro.

13. Dispositif (1) selon l'une des revendications précédentes, dans lequel au moins une partie des culasses (4) peut être déplacée le long de guides de culasse (7) à des fins de maintenance, et au moins une partie de ces culasses (4) est fixée à l'aide de systèmes de verrouillage à action rapide, en particulier à l'aide de systèmes de serrage à point zéro.

14. Dispositif (1) selon l'une des revendications précédentes, dans lequel au moins une partie des culasses (4) est associée à plusieurs tables élévatrices (5).

15. Dispositif (1) selon l'une des revendications précédentes, comprenant des stations de traitement individuels (14, 19, 21, 25, 26, 29) pour les étapes de traitement suivantes : poinçonnage, étirage, roulage, pré-scellage, scellage principal, estampage.

16. Dispositif (1) selon la revendication 14 et selon la revendication 15, dans lequel les tables élévatrices (5) des stations de traitement (19, 21) pour les étapes de traitement d'étirage et de roulage et/ou les tables élévatrices (5) des stations de traitement (25, 26) pour les étapes de traitement de pré-scellage et de scellage principal travaillent chacune contre une culasse commune (4).

17. Dispositif (1) selon l'une des revendications 15 à 16, dans lequel la table élévatrice (5) de la station de traitement (14) pour l'étape d'usinage de poinçonnage et/ou la table élévatrice (5) de la station de traitement (29) pour l'étape d'usinage de gaufrage travaille respectivement contre une culasse (4) propre associé uniquement à cette table élévatrice (5).

18. Dispositif (1) selon l'une des revendications 15 à 17, dans lequel les tables élévatrices (5) des stations de traitement (14, 19, 21) pour les étapes de traitement de poinçonnage, d'étirage et de roulage et/ou les tables élévatrices (5) des stations de traitement (26, 29) pour les étapes de traitement de scellage principal et de gaufrage disposent chacune d'un entraînement commun (38), en particulier chacune d'un servomoteur commun (38).

19. Dispositif (1) selon l'une des revendications 15 à 18, dans lequel la table élévatrice (5) de la station de traitement (25) dispose de son propre entraînement (38) pour l'étape d'usinage de pré-scellage, en particulier d'un propre servomoteur (38).
